# EUROPEAN PATENT APPLICATION

(11) **EP 4 640 481 A1**
(43) Date of publication of application: **29.10.2025**
(21) Application number: 23919096.0
(22) Date of filing: 03.02.2023
(51) Int. Cl.: B60L 53/60

(54) **VEHICLE AND CHARGING SYSTEM AND METHOD THEREFOR, AND COMPUTER STORAGE MEDIUM**

(71) Applicant: Contemporary Amperex Technology Co., Limited, Ningde, Fujian 352100 (CN)
(72) Inventor: ZHONG, Zhengxi, Ningde, Fujian 352100 (CN); QIU, Dong, Ningde, Fujian 352100 (CN); YANG, Lansen, Ningde, Fujian 352100 (CN); LIU, Xi, Ningde, Fujian 352100 (CN); JIAO, Hongzhe, Ningde, Fujian 352100 (CN); LUAN, Dawei, Ningde, Fujian 352100 (CN)
(74) Representative: Gong, Jinping
(86) International application number: PCT/CN2023/074393
(87) International publication number: WO 2024/159520

(57) **Abstract**

Disclosed in this application are a vehicle, a charging system and a charging method therefor, and a computer storage medium. The charging system for the vehicle includes: a plurality of charging interfaces, configured to connect to a plurality of charging piles; a detection unit, configured to detect connection states of the plurality of charging interfaces; a communication conversion unit, configured to perform interconversion between a first communication message and a second communication message; and a controller, configured to communicate with a corresponding charging pile through the first communication message and/or communicate with a corresponding charging pile through the communication conversion unit based on the connection states of the plurality of charging interfaces, to obtain corresponding charging information, where the communication conversion unit communicates with the controller through the second communication message, and the communication conversion unit communicates with the corresponding charging pile through the first communication message.

## Description

### TECHNICAL FIELD

This application relates to the technical field of vehicles, and in particular, to a vehicle, a charging system and a charging method therefor, and a computer storage medium.

### BACKGROUND

An electric vehicle is an environmentally friendly means of transportation equipped with a power battery that provides driving power to the electric vehicle. When the state of charge is low, the power battery is charged via a charging pile.

In existing technologies, during dual-charging pile cooperative charging, communication is established between two charging piles before a vehicle is charged, which imposes high hardware requirements and exhibits application limitations.

### SUMMARY

In view of the foregoing problems, this application provides a vehicle, a charging system and a charging method therefor, and a computer storage medium, so that hardware requirements can be lowered, and the application scope can be expanded.

According to a first aspect, this application provides a charging system for a vehicle. The system includes: a plurality of charging interfaces, configured to connect to a plurality of charging piles; a detection unit, configured to detect connection states of the plurality of charging interfaces; a communication conversion unit, configured to perform interconversion between a first communication message and a second communication message; and a controller, configured to communicate with a corresponding charging pile through the first communication message and/or communicate with a corresponding charging pile through the communication conversion unit based on the connection states of the plurality of charging interfaces, to obtain corresponding charging information. The communication conversion unit communicates with the controller through the second communication message, and the communication conversion unit communicates with the corresponding charging pile through the first communication message.

In the technical solution in the embodiments of this application, the plurality of charging interfaces connect to the plurality of charging piles. The detection unit detects the connection states of the plurality of charging interfaces. The communication conversion unit performs interconversion between the first communication message and the second communication message. The controller communicates with the corresponding charging pile through the first communication message and/or communicates with the corresponding charging pile through the communication conversion unit based on the connection states of the plurality of charging interfaces, to obtain the corresponding charging information. The communication conversion unit communicates with the controller through the second communication message, and the communication conversion unit communicates with the corresponding charging pile through the first communication message. In this way, when the system performs multi-interface charging, it is confirmed through the connection states of the charging interfaces whether to turn on the communication conversion unit. The communication conversion unit performs conversion between the first communication message and the second communication message. Therefore, in a charging process, the vehicle may communicate with the plurality of connected charging piles. The charging piles do not need to establish communication connections in advance. The plurality of independent charging piles can simultaneously charge the vehicle, thereby improving charging efficiency. In addition, charging pile operators can meet high-power charging requirements of vehicles without hardware update of charging piles, thereby lowering hardware requirements and expanding the application scope.

In some embodiments, the plurality of charging interfaces include a first charging interface and a second charging interface, and the controller is specifically configured to: if the first charging interface is in a connected state and the second charging interface is in a disconnected state, communicate with a charging pile connected to the first charging interface through the first communication message; if the first charging interface is in a disconnected state and the second charging interface is in a connected state, communicate with a charging pile connected to the second charging interface through the communication conversion unit; and if both the first charging interface and the second charging interface are in a connected state, communicate with a charging pile connected to the first charging interface through the first communication message, and communicate with a charging pile connected to the second charging interface through the communication conversion unit.

In some embodiments, the controller is further configured to: during the communication with the corresponding charging pile through the first communication message, charge the vehicle based on the corresponding charging information by using a first charging control state machine; and during the communication with the corresponding charging pile through the communication conversion unit, charge the vehicle based on the corresponding charging information by using a second charging control state machine.

In some embodiments, the detection unit includes a plurality of detection loops that correspond one to one to the plurality of charging interfaces, and each detection loop includes: a voltage divider circuit, where an input terminal of the voltage divider circuit is connected to a first charging connection confirmation terminal of a corresponding charging interface, and the voltage divider circuit is configured to divide a voltage at the first charging connection confirmation terminal to obtain a first voltage; and a filter circuit, where an input terminal of the filter circuit is connected to an output terminal of the voltage divider circuit, and the filter circuit is configured to filter the first voltage to obtain a second voltage, where the controller is connected to an output terminal of the filter circuit, and is configured to determine a connection state of a corresponding charging interface based on the second voltage.

In some embodiments, the voltage divider circuit includes: a first resistor, where a first terminal of the first resistor is connected to a preset power supply; a second resistor, where a first terminal of the second resistor is connected to a second terminal of the first resistor to form a first node, a second terminal of the second resistor is grounded, and the first node is connected the first charging connection confirmation terminal; a third resistor, where a first terminal of the third resistor is connected to the first node, and a second terminal of the third resistor is connected to the input terminal of the filter circuit; and a fourth resistor, where a first terminal of the fourth resistor is connected to the second terminal of the third resistor, and a second terminal of the fourth resistor is grounded.

In some embodiments, the filter circuit includes: a fifth resistor, where a first terminal of the fifth resistor is connected to the output terminal of the voltage divider circuit, and a second terminal of the fifth resistor is connected to the controller; and a first capacitor, where a first terminal of the first capacitor is connected to the second terminal of the fifth resistor, and a second terminal of the first capacitor is grounded.

In some embodiments, each charging pile in the plurality of charging piles includes: a sixth resistor, where a first terminal of the sixth resistor is connected to a second charging connection confirmation terminal of a corresponding charging pile, and a second terminal of the sixth resistor is grounded.

According to a second aspect, this application provides a vehicle, including the foregoing charging system for a vehicle.

In the technical solution in the embodiments of this application, when the system performs multi-interface charging by using the foregoing charging system for a vehicle, it is confirmed through the connection states of the charging interfaces whether to turn on the communication conversion unit. The communication conversion unit performs conversion between the first communication message and the second communication message. Therefore, in a charging process, the vehicle may communicate with the plurality of connected charging piles. The charging piles do not need to establish communication connections in advance. The plurality of independent charging piles can simultaneously charge the vehicle, thereby improving charging efficiency. In addition, charging pile operators can meet high-power charging requirements of vehicles without hardware update of charging piles, thereby lowering hardware requirements and expanding the application scope.

According to a third aspect, this application provides a charging method for a vehicle, where the method includes: obtaining connection states of a plurality of charging interfaces of the vehicle; and communicating with a corresponding charging pile through a first communication message and/or communicating with a corresponding charging pile through a communication conversion unit based on the connection states of the plurality of charging interfaces, to obtain corresponding charging information, where the communication conversion unit communicates with the vehicle through a second communication message, and the communication conversion unit communicates with the corresponding charging pile through the first communication message.

In the technical solution in the embodiments of this application, the connection states of the plurality of charging interfaces of the vehicle are obtained, and communication is performed with the corresponding charging pile through the first communication message and/or communication is performed with the corresponding charging pile through the communication conversion unit based on the connection states of the plurality of charging interfaces, to obtain corresponding charging information, where the communication conversion unit communicates with the vehicle through the second communication message, and the communication conversion unit communicates with the corresponding charging pile through the first communication message. In this way, during multi-interface charging, it is confirmed through the connection states of the charging interfaces whether to turn on the communication conversion unit. The communication conversion unit performs conversion between the first communication message and the second communication message. Therefore, in a charging process, the vehicle may communicate with the plurality of connected charging piles. The charging piles do not need to establish communication connections in advance. The plurality of independent charging piles can simultaneously charge the vehicle, thereby improving charging efficiency. In addition, charging pile operators can meet high-power charging requirements of vehicles without hardware update of charging piles, thereby lowering hardware requirements and expanding the application scope.

In some embodiments, the plurality of charging interfaces include a first charging interface and a second charging interface, and the communicating with a corresponding charging pile through a first communication message and/or communicating with a corresponding charging pile through a communication conversion unit based on the connection states of the plurality of charging interfaces includes: if the first charging interface is in a connected state and the second charging interface is in a disconnected state, communicating with a charging pile connected to the first charging interface through the first communication message; if the first charging interface is in a disconnected state and the second charging interface is in a connected state, communicating with a charging pile connected to the second charging interface through the communication conversion unit; and if both the first charging interface and the second charging interface are in a connected state, communicating with a charging pile connected to the first charging interface through the first communication message, and communicating with a charging pile connected to the second charging interface through the communication conversion unit.

In some embodiments, the method further includes: during the communication with the corresponding charging pile through the first communication message, charging the vehicle based on the corresponding charging information by using a first charging control state machine; and during the communication with the corresponding charging pile through the communication conversion unit, charging the vehicle based on the corresponding charging information by using a second charging control state machine.

According to a fourth aspect, this application provides a computer-readable storage medium. The computer-readable storage medium has a program stored therein. The program, when executed by a processor, implements the foregoing charging method for a vehicle.

In the technical solution in the embodiments of this application, when the program in the computer-readable storage medium is executed, and the multi-interface charging is performed through the foregoing charging method for a vehicle, it is confirmed through the connection states of the charging interfaces whether to turn on the communication conversion unit. The communication conversion unit performs conversion between the first communication message and the second communication message. Therefore, in a charging process, the controller may communicate with the plurality of connected charging piles. The charging piles do not need to establish communication connections in advance. The plurality of independent charging piles can simultaneously charge the vehicle, thereby improving charging efficiency. In addition, charging pile operators can meet high-power charging requirements of vehicles without hardware update of charging piles, thereby lowering hardware requirements and expanding the application scope.

The above description only refers to an overview of the technical solution of this application. In order to understand the technical means of this application more clearly, it can be implemented according to the content of the description. In order to make the above-mentioned and other purposes, features and advantages of this application more apparent, the specific embodiments of this application are listed below.

### BRIEF DESCRIPTION OF THE DRAWINGS

Various other advantages and benefits will become apparent to those of ordinary skill in the art upon reading the following detailed description of the preferred implementations. The accompanying drawings are only for the purpose of illustrating the preferred implementations and are not construed as limiting this application. In addition, in all the accompanying drawings, same parts are indicated by the same reference numerals. In the accompanying drawings:
FIG. 1 is a schematic block diagram of a charging system for a vehicle according to some embodiments of this application;
FIG. 2 is a schematic architectural diagram of a charging system for a vehicle according to some embodiments of this application;
FIG. 3 is a circuit connection schematic diagram of a detection loop according to some embodiments of this application;
FIG. 4 is a circuit topology diagram of a detection loop according to some embodiments of this application;
FIG. 5 is a block diagram of a vehicle according to some embodiments of this application; and
FIG. 6 is a flowchart of a charging method for a vehicle according to some embodiments of this application.

### DETAILED DESCRIPTION

The embodiments of the technical solutions of this application will be described in detail below with reference to the accompanying drawings. The following embodiments are only used to illustrate the technical solutions of this application more explicitly, and are thus only interpreted as examples, rather than used to limit the protection scope of this application.

Unless defined otherwise, all technical and scientific terms used herein have the same meaning as commonly understood by those skilled in the technical filed to which this application belongs. The terminology used herein is for the purpose of describing particular embodiments only and is not intended to limit this application. The terms "comprising" and "having" and any variations thereof in the description and claims of this application and the above description of the accompanying drawings are intended to cover non-exclusive inclusions.

In the description according to the embodiments of this application, the technical terms "first", "second", and the like are only used to distinguish different objects, and should not be understood as indicating or implying relative importance or implying the number, specific order or primary and secondary relationship of indicated technical features. In the description according to the embodiments of this application, "a plurality of" means two or more, unless otherwise expressly and specifically defined.

Reference herein to an "embodiment" means that a specific feature, structure, or characteristic described in connection with the embodiment can be included in at least one embodiment of this application. The phrase shown in various locations in the specification may not necessarily refer to a same embodiment, and is not an independent or alternative embodiment exclusive from another embodiment. It shall be explicitly and implicitly understood by those skilled in the art that the embodiments described herein may be combined with other embodiments.

In the description of this application, the term "and/or" is merely an association to describe the associated objects. It can mean that there are three kinds of relationships, such as A and/or B, which means that A exists alone, A and B exist at the same time, and B exists alone. In addition, in this specification, the character "/" usually indicates an "or" relationship between the associated objects.

In the description of the embodiments of this application, the term "a plurality of" means two or more (including two). Similarly, "a plurality of groups" means two or more groups (including two groups), and "a plurality of pieces" means two or more pieces (including two pieces).

In existing technologies, a technical solution of dual-charging pile cooperative charging includes a master charging pile and a slave charging pile. The master charging pile and the slave charging pile need to first establish a communication connection before a charging gun of the master charging pile and a charging gun of the slave charging pile can simultaneously charge a vehicle during the cooperative charging operation.

In the foregoing manner, the master charging pile and the slave charging pile need to establish communication before the vehicle can be charged by the dual piles simultaneously, which imposes additional requirements on the hardware of the charging piles. Commercially available charging piles need to be improved for use in a technical solution of dual-pile cooperative charging. As a result, the technical solution has limited applicability.

To solve the problem that existing charging piles need to be modified to implement the technical solution of dual-charging cooperative charging. This application provides a charging system for a vehicle. A plurality of charging interfaces connect to a plurality of charging piles. A detection unit detects connection states of the plurality of charging interfaces. A communication conversion unit performs interconversion between a first communication message and a second communication message. A controller communicates with a corresponding charging pile through the first communication message and/or communicates with a corresponding charging pile through the communication conversion unit based on the connection states of the plurality of charging interfaces, to obtain corresponding charging information. The communication conversion unit communicates with the controller through the second communication message, and the communication conversion unit communicates with the corresponding charging pile through the first communication message. In this way, when the system performs multi-interface charging, it is confirmed through the connection states of the charging interfaces whether to turn on the communication conversion unit. The communication conversion unit performs conversion between the first communication message and the second communication message. Therefore, in a charging process, the vehicle may communicate with the plurality of connected charging piles. The charging piles do not need to establish communication connections in advance. The plurality of independent charging piles can simultaneously charge the vehicle, thereby improving charging efficiency. In addition, charging pile operators can meet high-power charging requirements of vehicles without hardware update of charging piles, thereby lowering hardware requirements and expanding the application scope.

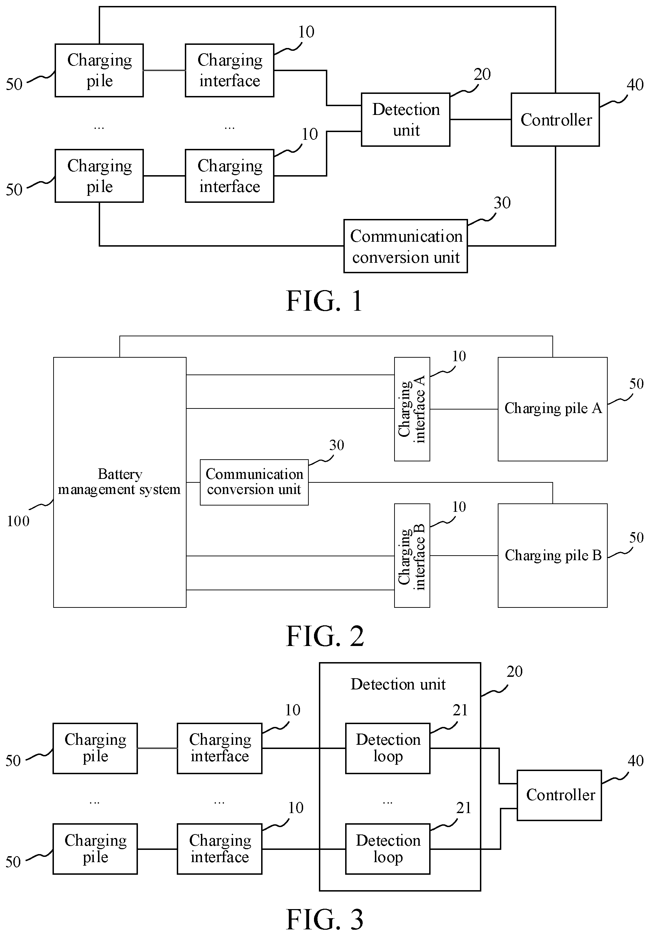

According to some embodiments of this application, referring to FIG. 1, a charging system for a vehicle may include a plurality of charging interfaces 10, a detection unit 20, a communication conversion unit 30, and a controller 40.

The plurality of charging interfaces 10 are configured to connect to a plurality of charging piles 50. The detection unit 20 is configured to detect connection states of the plurality of charging interfaces 10. The communication conversion unit 30 is configured to perform interconversion between a first communication message and a second communication message. The controller 40 is configured to communicate with a corresponding charging pile 50 through the first communication message and/or communicate with a corresponding charging pile 50 through the communication conversion unit 30 based on the connection states of the plurality of charging interfaces 10, to obtain corresponding charging information. The communication conversion unit 30 communicates with the controller 40 through the second communication message. The communication conversion unit 30 communicates with the corresponding charging pile 50 through the first communication message.

The plurality of charging interfaces 10 are disposed on the vehicle. When the charging interfaces 10 are connected to the charging piles 50, the charging piles 50 may perform a charging operation on a power battery in the vehicle. The detection unit 20 detects a connection state of each charging interface 10, and sends a detection signal to the controller 40. The controller 40 determines the connection state of each charging interface 10 based on the received detection signal. When it is determined that the vehicle has a charging interface 10 in a connected state, that is, the charging interface 10 is connected to a charging pile 50, the controller 40 may directly communicate with the charging pile 50 connected to the charging interface 10 through the first communication message, or may communicate with the communication conversion unit 30 through the second communication message. Next, the communication conversion unit 30 converts the second communication message into the first communication message and sends the first communication message to the charging pile 50. For the first communication message sent by the charging pile 50, the communication conversion unit 30 receives the first communication message, converts the first communication message into the second communication message, and forwards the second communication message to the controller 40. Therefore, the communication and interaction between the controller 40 and the corresponding charging pile 50 are implemented based on the message conversion of the communication conversion unit 30.

The first communication message may be a GB/T standard charging communication message. The second communication message may be a proprietary communication message. The controller 40 includes two sets of independent external communication messages. One set uses standard international charging communication messages that can enable the controller 40 to directly communicate with the charging pile 50. The other set uses proprietary communication messages to enable the controller 40 to communicate with the communication conversion unit 30. The communication conversion unit 30 may convert a proprietary communication message into a GB/T standard charging communication message, thereby implementing communication with the corresponding charging pile 50.

For example, as shown in FIG. 2, the controller and the power battery of the vehicle are disposed in a battery management system 100. The vehicle includes two charging interfaces 10, which are respectively denoted as a charging interface A and a charging interface B. The charging interface A is connected to a charging pile A in the charging pile 50. The charging interface B is connected to a charging pile B in the charging pile 50. When the controller determines, based on a connection state of the charging interface A and a connection state of the charging interface B detected by the detection unit, that both the charging interface A and the charging interface B are in a connected state, the controller directly communicates with the charging pile A by using a standard GB/T standard charging communication message, that is, the first communication message, and communicates with the communication conversion unit 30 by using a proprietary communication message, that is, the second communication message. The communication conversion unit 30 and the charging pile B communicate by using an international charging standard message, thereby implementing conversion between a proprietary communication message and an international charging standard message through the communication conversion unit 30. That is, the controller communicates with the charging pile B through the communication conversion unit 30. In the foregoing manner, the controller may implement simultaneous communication with two independent GB/T standard charging piles (the charging pile A and the charging pile B), and dynamically allocate charging requirements based on the capabilities and states of the charging piles, thereby implementing efficient charging of the vehicle by the two independent charging piles.

In the technical solution in the embodiments of this application, when the system performs multi-interface charging, it is confirmed through the connection states of the charging interfaces whether to turn on the communication conversion unit. The communication conversion unit may perform conversion between the first communication message and the second communication message. In a charging process, the controller directly communicates with the plurality of connected charging piles. The charging piles do not need to establish communication. The plurality of independent charging piles can simultaneously charge the vehicle, thereby improving charging efficiency. In addition, charging pile operators can meet high-power charging requirements of vehicles without hardware update of charging piles.

According to some embodiments of this application, optionally, the plurality of charging interfaces 10 include a first charging interface and a second charging interface. The controller 40 is specifically configured to: if the first charging interface is in a connected state and the second charging interface is in a disconnected state, communicate with a charging pile 50 connected to the first charging interface through the first communication message; if the first charging interface is in a disconnected state and the second charging interface is in a connected state, communicate with a charging pile 50 connected to the second charging interface through the communication conversion unit 30; and if both the first charging interface and the second charging interface are in a connected state, communicate with a charging pile 50 connected to the first charging interface through the first communication message, and communicate with a charging pile 50 connected to the second charging interface through the communication conversion unit 30.

Referring to FIG. 2, for example, the first charging interface is the charging interface A, the second charging interface is the charging interface B, the charging pile 50 connected to the first charging interface is the charging pile A, and the charging pile 50 connected to the second charging interface is the charging pile B. When the controller determines that the charging interface A is connected to the charging pile A and the charging interface B is not connected to the charging pile B, the controller communicates with the charging pile A through a first message. When the controller determines that the charging interface A is not connected to the charging pile A and the charging interface B is connected to the charging pile B, the controller communicates with the communication conversion unit 30 by using the second communication message, and the communication conversion unit 30 communicates with the charging pile B by using the first communication message, thereby implementing the conversion between the first communication message and the second communication message through the communication conversion unit 30. Therefore, the interaction between the controller and the charging pile B is implemented. When the controller determines that the charging interface A is connected to the charging pile A and the charging interface B is connected to the charging pile B, the controller directly communicates with the charging pile A by using the first communication message, and simultaneously communicates with the communication conversion unit 30 by using the second communication message. The communication conversion unit 30 communicates with the charging pile B by using the first communication message, so that the controller implements communication with the charging pile B based on the function of conversion between the first communication message and the second communication message by the communication conversion unit 30. Therefore, the controller may simultaneously implement communication with the charging pile A and the charging pile B, thereby implementing dual-charging pile cooperative charging.

In the foregoing manner, the controller 40 may implement simultaneous communication with two independent GB/T standard charging piles, and dynamically allocate charging requirements based on the capabilities and states of the charging piles, thereby implementing efficient charging of the vehicle by the two independent charging piles.

According to some embodiments of this application, optionally, the controller 40 is further configured to: during the communication with the corresponding charging pile 50 through the first communication message, charge the vehicle based on the corresponding charging information by using a first charging control state machine; and during the communication with the corresponding charging pile 50 through the communication conversion unit 30, charge the vehicle based on the corresponding charging information by using a second charging control state machine.

The two sets of charging state machines disposed inside the vehicle operate independently. For the charging pile 50 with which the controller 40 directly communicates through the first communication message, the vehicle is charged by using the first charging control state machine. For the charging pile 50 with which the controller 40 communicates based on the communication conversion unit 30, the controller 40 charges the vehicle by using the second charging control state machine.

For example, FIG. 2 is used as an example. When the controller determines that the charging interface A is connected to the charging pile A and the charging interface B is not connected to the charging pile B and the controller communicates with the charging pile A through the first message, the controller simultaneously uses a first charging state controller to enable the charging pile A to charge the vehicle, thereby performing single-pile charging. When the controller determines that the charging interface A is not connected to the charging pile A and the charging interface B is connected to the charging pile B, the controller communicates with the communication conversion unit 30 by using the second communication message, the communication conversion unit 30 communicates with the charging pile B by using the first communication message, thereby implementing the conversion between the first communication message and the second communication message through the communication conversion unit 30, and the controller simultaneously uses a second charging state controller to enable the charging pile B to charge the vehicle, thereby performing single-pile charging. When the controller determines that the charging interface A is connected to the charging pile A and the charging interface B is connected to the charging pile B, the controller directly communicates with the charging pile A by using the first communication message, communicates with the charging pile B through the communication conversion unit 30, and simultaneously controls a charging process between the charging pile A and the vehicle by using the first charging state controller and a charging process between the charging pile B and the vehicle by using the second charging state controller, thereby implementing dual-pile cooperative charging.

In this embodiment, for the charging pile 50 that directly performs communication through the first communication message, the first charging control state machine is used. For the charging pile 50 that performs communication through the communication conversion unit 30, the second charging control state machine is used, so that the two independent state machines can perform respective charging control on the two independent charging piles 50.

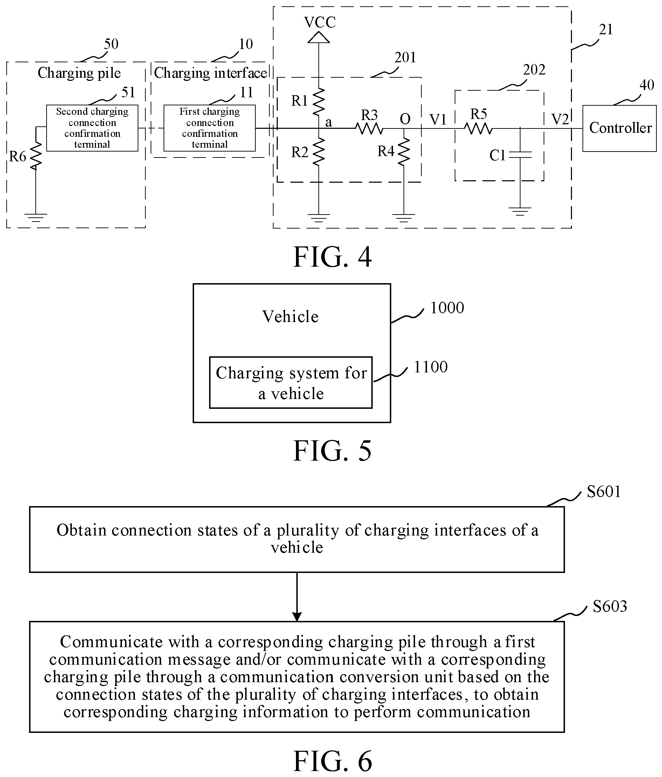

According to some embodiments of this application, optionally, referring to FIG. 3 and FIG. 4, the detection unit 20 includes a plurality of detection loops 21 that correspond one to one to the plurality of charging interfaces 10. Each detection loop 21 includes: a voltage divider circuit 201, where an input terminal of the voltage divider circuit 201 is connected to a first charging connection confirmation terminal 11 of a corresponding charging interface 10, and the voltage divider circuit 201 is configured to divide a voltage at the first charging connection confirmation terminal 11 to obtain a first voltage V1; and a filter circuit 202, where an input terminal of the filter circuit 202 is connected to an output terminal of the voltage divider circuit 201, and the filter circuit 202 is configured to filter the first voltage V1 to obtain a second voltage V2. The controller 40 is connected to an output terminal of the filter circuit 201, and is configured to determine a connection state of a corresponding charging interface 10 based on the second voltage V2.

The detection loops 21 in the detection unit 20 are correspondingly connected to the charging interfaces 10. One detection loop 21 is responsible for detecting a connection state of one charging interface 10, to detect the connection state of each charging interface 10 in the vehicle and feed back the connection state of the corresponding charging interface 10 to the controller 40. The controller 40 determines a communication protocol and a corresponding charging mode based on the connection state of each charging interface 10.

As an example, referring to FIG. 2, the vehicle includes two charging interfaces 10, which are respectively a charging interface A and a charging interface B. In addition, the detection unit 20 includes two detection loops 21, which are respectively a detection loop A and a detection loop B. The two charging piles 50 are respectively a charging pile A matching the charging interface A and a charging pile B matching the charging interface B. A first connection confirmation terminal of the charging interface A is connected to the detection loop A. The detection loop A confirms, based on a voltage at the first charging connection confirmation terminal of the charging interface A, whether the charging pile A is connected to the charging interface A. A first charging connection confirmation terminal of the charging interface B is connected to the detection loop B. The detection loop B determines, based on a voltage at the first charging connection confirmation terminal of the charging interface B, whether the charging pile B is connected to the charging interface B. An output terminal of the detection loop A is connected to one detection input terminal of the controller, and the controller determines, based on an output signal of the detection circuit A, whether the charging pile A is connected to the charging interface A. An output terminal of the detection loop B is connected to the other detection input terminal of the controller, and the controller determines, based on an output signal of the detection circuit B, whether the charging pile B is connected to the charging interface B.

In the detection loop 21, the input terminal of the voltage divider circuit 201 is connected to a first charging connection confirmation terminal 11 of the charging interface 10 to divide a voltage at the first charging connection confirmation terminal 11. The first voltage V1 obtained through the voltage division is filtered by the filter circuit 202 to obtain the second voltage V2, and the second voltage V2 obtained through the filtering is sent to the controller 40. The control 40 determines the connection state of the corresponding charging interface 10 based on the second voltage V2.

In this embodiment, the voltage divider circuit 201 first divides a voltage signal for output, to reduce a voltage value input into the controller. Next, signal interference is eliminated based on a filtering operation of the filter circuit 202, thereby improving detection precision.

According to some embodiments of this application, optionally, the voltage divider circuit 201 includes: a first resistor R1, where a first terminal of the first resistor R1 is connected to a preset power supply VCC; a second resistor R2, where a first terminal of the second resistor R2 is connected to a second terminal of the first resistor R1 to form a first node a, a second terminal of the second resistor R2 is grounded, and the first node a is connected the first charging connection confirmation terminal 11; a third resistor R3, where a first terminal of the third resistor R3 is connected to the first node a, and a second terminal of the third resistor R3 is connected to the input terminal of the filter circuit 202; and a fourth resistor R4, where a first terminal of the fourth resistor R4 is connected to the second terminal of the third resistor R3, and a second terminal of the fourth resistor R4 is grounded.

The output terminal of the voltage divider circuit 201 is a node O formed by connecting the first terminal of the fourth resistor R4 and the second terminal of the third resistor R3. The voltage divider circuit 201 includes a first-stage voltage divider resistor formed by the first resistor R1 and the second resistor R2 and a second-stage voltage divider circuit formed by the third resistor R3 and the fourth resistor R4. When a connection confirmation terminal is not connected to a charging gun, a voltage divider operation is performed on the preset power supply VCC through the first resistor R1 and the second resistor R2. The first node a outputs a corresponding first voltage divider voltage. Next, the third resistor R3 and the fourth resistor R4 divide the first voltage divider voltage to obtain the first voltage V1, and output the first voltage V1 through the node O. When the first charging connection confirmation terminal 11 of the charging interface 10 is connected to a charging pile 50, the voltage divider circuit is changed, causing an impact on the first voltage V1 output by the node O. The second voltage V2 output by filtering the changed first voltage V1 is input into the controller 40. In this case, the controller 40 may determine, based on the changed second voltage V2, that the charging interface 10 is connected to the charging pile 50. The controller 40 may prestore a valid voltage detection range. When the obtained second voltage V2 is within the valid voltage detection range, it is determined that the corresponding charging interface 10 is connected to the charging pile 50, or otherwise, it is considered that the charging interface 10 is not connected to the charging pile 50.

When the foregoing charging interface 10 is connected to the charging pile 50, the connection confirmation terminal of the charging interface 10 may be connected to a corresponding electronic component in the charging pile 50 to change a voltage divider resistance or an input voltage of the voltage divider circuit 201, to change the first voltage V1, thereby changing an output signal of the detection loop 21. For example, the connection confirmation terminal is connected to a grounding resistance in the charging pile 50, or is connected to a preset electrical signal in the charging pile 50. This is not limited herein. Additionally, the voltage divider circuit 201 may be disposed as a one-stage voltage divider, or another multi-stage voltage divider, which may be specifically disposed according to the performance of a control chip and detection quality. Additionally, the voltage divider circuit 201 may alternatively use a resistor module as a voltage divider resistor. This is not limited herein.

In this embodiment, voltage division is performed through the first resistor R1, the second resistor R2, the third resistor R3, and the fourth resistor R4, thereby reducing an output voltage value.

According to some embodiments of this application, optionally, the filter circuit 202 includes: a fifth resistor R5, where a first terminal of the fifth resistor R5 is connected to the output terminal of the voltage divider circuit 201, and a second terminal of the fifth resistor R5 is connected to the controller 40; and a first capacitor C1, where a first terminal of the first capacitor C1 is connected to the second terminal of the fifth resistor R5, and a second terminal of the first capacitor C1 is grounded. In other words, the foregoing first voltage V1 output by the node O is input into an RC filter formed by the fifth resistor R5 and the first capacitor C1, and the RC filter performs a filtering operation on the first voltage V1, and outputs the second voltage V2 to the controller 40.

The foregoing filter circuit 202 formed by the fifth resistor R5 and the first capacitor C1 is only an optional implementation of this application, and may be specifically arranged according to an actual case. For example, the filter circuit 202 may be formed by only a filter capacitor, or may be built in another filter form, to filter out an interference signal in the first voltage V1, thereby ensuring detection precision.

According to some embodiments of this application, optionally, each charging pile 50 in the plurality of charging piles 50 includes: a sixth resistor R6, where a first terminal of the sixth resistor R6 is connected to a second charging connection confirmation terminal 51 of a corresponding charging pile 50, and a second terminal of the sixth resistor R6 is grounded.

Continuing to use FIG. 2 as an example, the charging interfaces 10 in the vehicle include the charging interface A and the charging interface B, the charging pile A in the charging pile 50 is connected to the charging interface A, and the charging pile B is connected to the charging interface B. The sixth resistor R6 is built in the charging pile A and the charging pile B. In the charging pile 50, the first terminal of the sixth resistor R6 is connected to the second charging connection confirmation terminal 51 of the corresponding charging pile 50, and the other terminal of the sixth resistor R6 is grounded. It may be understood that when the charging pile A is connected to the charging interface A, the second charging connection confirmation terminal 51 of the charging pile A is connected to the first charging connection confirmation terminal of the charging interface A 11. When the charging pile B is connected to the charging interface B, the second charging connection confirmation terminal 51 of the charging pile B is connected to the first charging connection confirmation terminal of the charging interface B 11.

Referring to FIG. 4, when the charging pile 50 is connected to the charging interface 10, the second charging connection confirmation terminal 51 of the charging pile 50 is connected to the first charging connection confirmation terminal 11 of the charging interface 10. Further, because the first charging connection confirmation terminal 11 of the charging interface 10 is connected to the detection loop 21, the first terminal of the sixth resistor R6 is connected to the first node a of the voltage divider circuit 201 in the detection loop 21. In this case, the voltage divider circuit 201 performs a voltage divider operation based on the first resistor R1, the second resistor R2, the third resistor R3, the fourth resistor R4, and the sixth resistor R6, and outputs the corresponding first voltage V1 to the filter circuit 202. The filter circuit 202 filters the first voltage V1 to output the second voltage V2 to the controller 40. The controller 40 determines the connection state of charging interface 10 based on the second voltage V2. When the charging pile 50 is not connected to a charging interface 10, in this case, the voltage divider circuit 201 performs a voltage divider operation based on the first resistor R1, the second resistor R2, the third resistor R3, and the fourth resistor R4, and outputs the corresponding first voltage V1 to the filter circuit 202. The filter circuit 202 filters the first voltage V1 to output the second voltage V2 to the controller 40. The controller 40 determines, based on the second voltage V2, that the charging interface 10 is in a disconnected state. Therefore, the controller 40 may determine the valid voltage detection range corresponding to the detection loop 21 according to parameter settings.

In this embodiment, through the sixth resistor R built in the charging pile 50, an voltage value output by the detection loop 21 is adjusted, thereby implementing the detection of the connection state of the charging interface 10. The solution requires low costs and is easy to implement.

In the charging system, after the charging wake-up of the vehicle, the controller 40 detects connection states of current charging interfaces 10, determines, based on the connection states of the charging interfaces 10, a quantity of charging interfaces 10 connected to charging piles 50 and the charging interfaces 10 connected to the charging piles 50, and determines a quantity of charging piles that are currently connected in parallel to a battery system charging loop. The controller 40 starts different charging control procedures based on a detected parallel connection case of charging piles.

Specifically, referring to FIG. 2, if currently the controller determines, by checking charging interfaces, that only a single pile performs charging currently (only the charging interface A is in a connected state, or only the charging interface B is in a connected state), the system starts a single-pile charging procedure. If currently the controller determines, by checking charging interfaces, dual piles are perform charging (the charging interface A is in a connected state, and the charging interface B is in a connected state), the system starts a dual-pile charging procedure, that is, directly communicates with the charging pile A by using the first communication message, communicates with the charging pile B through the communication conversion unit 30, and simultaneously controls a charging process between the charging pile A and the vehicle by using the first charging state controller and a charging process between the charging pile B and the vehicle by using the second charging state controller, thereby implementing dual-pile cooperative charging.

Additionally, if it is detected that a second charging pile is connected in parallel to the charging system in a single-pile charging process, the system may simultaneously start a charging procedure for the second charging pile in a case that a single pile has started charging. For example, it is assumed that a current single-pile charging process is that the charging pile A charges the vehicle, that is, the controller communicates with the charging pile A through the first message, and charges the vehicle by using the first charging state controller. In a process of charging the vehicle by the charging pile A, the controller determines, based on a voltage at a first charging connect terminal of the charging interface B, that the charging interface B is connected to the charging pile B. The controller establishes communication with the charging pile B through the communication conversion unit 30, and simultaneously uses the second charging state controller to enable the charging pile B to charge the vehicle. In this case, the charging pile A and the charging pile B perform dual-pile cooperative charging on the vehicle.

According to some embodiments of this application, referring to FIG. 5, a vehicle 1000 includes the foregoing charging system 1100 for a vehicle.

According to some embodiments of this application, referring to FIG. 6, the charging method for a vehicle may include the following steps.

S601: Obtain connection states of a plurality of charging interfaces of the vehicle.

S603: Communicate with a corresponding charging pile through a first communication message and/or communicate with a corresponding charging pile through a communication conversion unit based on the connection states of the plurality of charging interfaces, to obtain corresponding charging information, where the communication conversion unit communicates with the vehicle through a second communication message, and the communication conversion unit communicates with the corresponding charging pile through the first communication message.

In some embodiments, the plurality of charging interfaces include a first charging interface and a second charging interface, and the communicating with a corresponding charging pile through a first communication message and/or communicating with a corresponding charging pile through a communication conversion unit based on the connection states of the plurality of charging interfaces includes: if the first charging interface is in a connected state and the second charging interface is in a disconnected state, communicating with a charging pile connected to the first charging interface through the first communication message; if the first charging interface is in a disconnected state and the second charging interface is in a connected state, communicating with a charging pile connected to the second charging interface through the communication conversion unit; and if both the first charging interface and the second charging interface are in a connected state, communicating with a charging pile connected to the first charging interface through the first communication message, and communicating with a charging pile connected to the second charging interface through the communication conversion unit.

In some embodiments, the method further includes: during the communication with the corresponding charging pile through the first communication message, charging the vehicle based on the corresponding charging information by using a first charging control state machine; and during the communication with the corresponding charging pile through the communication conversion unit, charging the vehicle based on the corresponding charging information by using a second charging control state machine.

According to some embodiments of this application, a computer-readable storage medium has a program stored therein. The program, when executed by a processor, implements the foregoing charging method for a vehicle.

It needs to be noted that for the descriptions of the vehicle, the method, and the storage medium, refer to the descriptions of the system.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. Especially, as long as there is no structural conflict, the various technical features mentioned in each embodiment can be combined in any way. This application is not limited to the particular embodiments disclosed herein, but comprises all technical solutions that fall within the scope of the claims.

## Claims

1. A charging system for a vehicle, wherein the system comprises:
a plurality of charging interfaces, configured to connect to a plurality of charging piles;
a detection unit, configured to detect connection states of the plurality of charging interfaces;
a communication conversion unit, configured to perform interconversion between a first communication message and a second communication message; and
a controller, configured to communicate with a corresponding charging pile through the first communication message and/or communicate with a corresponding charging pile through the communication conversion unit based on the connection states of the plurality of charging interfaces, to obtain corresponding charging information, wherein the communication conversion unit communicates with the controller through the second communication message, and the communication conversion unit communicates with the corresponding charging pile through the first communication message.

2. The charging system for a vehicle according to claim 1, wherein the plurality of charging interfaces comprise a first charging interface and a second charging interface, and the controller is specifically configured to:
if the first charging interface is in a connected state and the second charging interface is in a disconnected state, communicate with a charging pile connected to the first charging interface through the first communication message;
if the first charging interface is in a disconnected state and the second charging interface is in a connected state, communicate with a charging pile connected to the second charging interface through the communication conversion unit; and
if both the first charging interface and the second charging interface are in a connected state, communicate with a charging pile connected to the first charging interface through the first communication message, and communicate with a charging pile connected to the second charging interface through the communication conversion unit.

3. The charging system for a vehicle according to claim 1 or 2, wherein the controller is further configured to:
during the communication with the corresponding charging pile through the first communication message, charge the vehicle based on the corresponding charging information by using a first charging control state machine; and
during the communication with the corresponding charging pile through the communication conversion unit, charge the vehicle based on the corresponding charging information by using a second charging control state machine.

4. The charging system for a vehicle according to claim 1, wherein the detection unit comprises a plurality of detection loops that correspond one to one to the plurality of charging interfaces, and each detection loop comprises:
a voltage divider circuit, wherein an input terminal of the voltage divider circuit is connected to a first charging connection confirmation terminal of a corresponding charging interface, and the voltage divider circuit is configured to divide a voltage at the first charging connection confirmation terminal to obtain a first voltage; and
a filter circuit, wherein an input terminal of the filter circuit is connected to an output terminal of the voltage divider circuit, and the filter circuit is configured to filter the first voltage to obtain a second voltage, wherein
the controller is connected to an output terminal of the filter circuit, and is configured to determine a connection state of a corresponding charging interface based on the second voltage.

5. The charging system for a vehicle according to claim 4, wherein the voltage divider circuit comprises:
a first resistor, wherein a first terminal of the first resistor is connected to a preset power supply;
a second resistor, wherein a first terminal of the second resistor is connected to a second terminal of the first resistor to form a first node, a second terminal of the second resistor is grounded, and the first node is connected the first charging connection confirmation terminal;
a third resistor, wherein a first terminal of the third resistor is connected to the first node, and a second terminal of the third resistor is connected to the input terminal of the filter circuit; and
a fourth resistor, wherein a first terminal of the fourth resistor is connected to the second terminal of the third resistor, and a second terminal of the fourth resistor is grounded.

6. The charging system for a vehicle according to claim 4, wherein the filter circuit comprises:
a fifth resistor, wherein a first terminal of the fifth resistor is connected to the output terminal of the voltage divider circuit, and a second terminal of the fifth resistor is connected to the controller; and
a first capacitor, wherein a first terminal of the first capacitor is connected to the second terminal of the fifth resistor, and a second terminal of the first capacitor is grounded.

7. The charging system for a vehicle according to any one of claims 4 to 6, wherein each charging pile in the plurality of charging piles comprises:
a sixth resistor, wherein a first terminal of the sixth resistor is connected to a second charging connection confirmation terminal of a corresponding charging pile, and a second terminal of the sixth resistor is grounded.

8. A vehicle, comprising the charging system for a vehicle according to any one of claims 1 to 7.

9. A charging method for a vehicle, wherein the method comprises:
obtaining connection states of a plurality of charging interfaces of the vehicle; and
communicating with a corresponding charging pile through a first communication message and/or communicating with a corresponding charging pile through a communication conversion unit based on the connection states of the plurality of charging interfaces, to obtain corresponding charging information, wherein the communication conversion unit communicates with the vehicle through a second communication message, and the communication conversion unit communicates with the corresponding charging pile through the first communication message.

10. The charging method for a vehicle according to claim 9, wherein the plurality of charging interfaces comprise a first charging interface and a second charging interface, and the communicating with a corresponding charging pile through a first communication message and/or communicating with a corresponding charging pile through a communication conversion unit based on the connection states of the plurality of charging interfaces comprises:
if the first charging interface is in a connected state and the second charging interface is in a disconnected state, communicating with a charging pile connected to the first charging interface through the first communication message;
if the first charging interface is in a disconnected state and the second charging interface is in a connected state, communicating with a charging pile connected to the second charging interface through the communication conversion unit; and
if both the first charging interface and the second charging interface are in a connected state, communicating with a charging pile connected to the first charging interface through the first communication message, and communicating with a charging pile connected to the second charging interface through the communication conversion unit.

11. The charging method for a vehicle according to claim 9 or 10, wherein the method further comprises:
during the communication with the corresponding charging pile through the first communication message, charging the vehicle based on the corresponding charging information by using a first charging control state machine; and
during the communication with the corresponding charging pile through the communication conversion unit, charging the vehicle based on the corresponding charging information by using a second charging control state machine.

12. A computer-readable storage medium, wherein the computer-readable storage medium has a program stored therein, and the program, when executed by a processor, implements the charging method for a vehicle according to any one of claims 9 to 11.
